# EUROPEAN PATENT APPLICATION

(11) **EP 1 109 418 A2**
(43) Date of publication of application: **20.06.2001**
(21) Application number: 00310953.5
(22) Date of filing: 08.12.2000
(51) Int. Cl.: H04Q 7/24

(54) **Telecommunications network and method for conveying measurement information for multiple pilots of a candidate frequency**

(30) Priority: 14.12.1999 US 460317
(71) Applicant: LUCENT TECHNOLOGIES INC., Murray Hill, New Jersey 07974-0636 (US)
(72) Inventor: Chander, Sharat Subramaniyam, Woodridge, Illinois 60517 (US)
(74) Representative: Buckley, Christopher Simon Thirsk

(57) **Abstract**

A telecommunications network and method for conveying measurement information for multiple pilots of a candidate frequency, providing interoperability between a plurality of telecommunications systems. The telecommunications network includes a plurality of telecommunications systems having a plurality of mobile switching centers(MSCs), a plurality of base stations (BSs), and a plurality of mobile stations (MSs). The plurality of MSCs utilize an inter-system having one of more signaling messages which include a constructor parameter capable of conveying information for multiple pilots of a candidate frequency.

## Description

### Background Of The Invention

This invention relates to wireless telecommunication network and, more particularly, to inter-system hard handoffs between telecommunications systems.

In existing wireless telecommunication systems, a mobile station (MS) may roam in and out of the coverage area of a cell or base station (BS). As an MS roams out of the coverage area of a BS, the connection between the MS and the serving BS deteriorates in strength and/or quality. As this occurs, measurements of signal strength of neighboring BSs must be taken to assess whether the MS should reselect a particular BS for service (when in the idle mode) or be handed off to the neighboring BS (when in the busy mode). Before handing off the MS, the serving BS requests a handoff from the serving mobile switching center (MSC), which locates available neighboring BSs that have adequate signal strength to satisfy the handoff request. Measurements of the signal strength for both the serving BS in which the MS is operating and the neighboring BS are taken and compared by the MSC in order to determine whether the MS should be handed off and if so, to which neighboring BS.

An industry standard for communications between a MS and a BS is defined in the CDMA air interface standard, IS-95-B. This standard introduced a new capability of Mobile Assisted Hard Handoff (MAHHO), which allows a serving BS to request an MS to perform pilot strength measurements on not just the pilot it is currently on on the serving BS, but also other pilots on a candidate frequency. Candidate frequency, as used herein, refers to the frequency desired by a serving base station, on which measurements are to be made. Requests by the serving BS to perform pilot strength measurements can be made as a one time request or as a request that results in periodic measurements made over time. In either case, the MS responds with measurements for the various applicable pilots of the candidate frequency. These measurements are sent to the serving BS, and are then passed on to the target BS during the hard handoff process. Target BS, as used herein, refers to the BS used by an MS after a handoff is completed. The target BS can then attempt to identify a free or open channel for the hard handoff based on the pilot strength measurements taken by an MS.

As an MS roams out of the coverage area of a telecommunications system, an inter-system hard handoff (or handoff between telecommunications systems) becomes necessary. An inter-system signaling standard for signals sent between serving and target MSCs is defined in TIA/EIA-41-D. Currently during inter-system hard handoffs, only a single instance of the pilot strength measurement information is carried to the target MSC in the FacilitiesDirective2, HandoffBack2 and HandoffToThird2 invoke messages, as defined the TIA/EIA-41-D standard. The TIA/EIA-41-D standard does not support transmitting information for multiple pilots of an MS's measurements of a candidate frequency.

It would be advantageous to have a telecommunications network and method capable of conveying measurement information between telecommunications systems, from a serving MSC to a target MSC, for multiple pilots of a candidate frequency. Such a network and method would allow the target MSC to determine the most appropriate candidate based on all of the measurements made by the MS.

### Summary Of The Invention

One aspect of the invention is a telecommunications network capable of conveying measurement information for multiple pilots of a candidate frequency between telecommunications systems. The telecommunications network comprises a plurality of telecommunications systems having a plurality of MSCs each connected to a plurality of BSs. The telecommunications network further comprises a plurality of MSs capable of communicating with the MSCs through the BSs. The plurality of MSCs have an inter-system communications protocol for communicating information required for interoperability between the plurality of telecommunications systems. The inter-system communications protocol includes one or more signaling messages containing one or more modified parameters within one or more of the signaling messages. The modified parameters include a constructor parameter having multiple individual parameters capable of conveying measurement information for multiple pilots of a candidate frequency. Such a parameter allows a target MSC to determine the most appropriate candidate to receive a handoff. The determination is made based on a more comprehensive set of measurement information, as compared to the prior art which conveyed measurement information for only a single pilot.

In another aspect of the invention, a method is provided for conveying measurement information between telecommunications systems. The method comprises formatting a plurality of signaling messages and a plurality of message parameters to include a constructor parameter for carrying measurement information for multiple pilots of a candidate frequency, and transmitting the signaling messages between telecommunications systems.

The invention can be applied to CDMA wireless telecommunications systems but can be extended to other access technology systems including but not limited to TDMA, GSM, UMTS, and IMT-2000.

### Brief Description Of The Drawings

FIG. 1 illustrates a portion of a telecommunications network associated with the invention.

FIG. 2 illustrates a signaling message according to a prior art inter-system communications protocol.

FIG. 3 illustrates a signaling message according to one embodiment of the invention.

FIG. 4 is a signaling diagram illustrating the flow of messages during an inter-system handoff forward according to one embodiment of the invention.

FIG. 5 is a signaling diagram illustrating the flow of messages during an inter-system handoff back according to one embodiment of the invention.

FIG. 6 is a signaling diagram illustrating the flow of messages during an inter-system Handoff To Third according to one embodiment of the invention.

### Detailed Description Of The Invention

The invention is a network and method capable of conveying measurement information for multiple pilots of a candidate frequency between telecommunications systems to provide improved handoff performance. Although the invention can be applied to other access technology systems including but not limited to TDMA, GSM, UMTS, and IMT-2000, the exemplary embodiments described herein disclose a CDMA wireless telecommunications system incorporating the TIA/EIA-41-D industry standard.

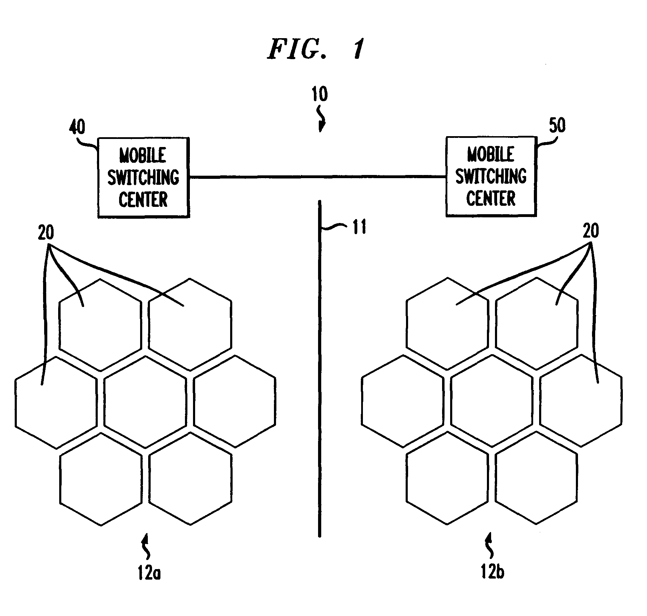

FIG. 1 is a diagram illustrating a portion of a telecommunication network 10 associated with the invention. The representation of FIG. 1 is for purposes of illustration only and is not intended to limit the possible implementations of the network and method of the invention.

As can be seen in FIG. 1, a given area may be served by a plurality of base stations (or cells) 20. Boundary line 11 divides the network 10 into two systems 12a and 12b. Each of the systems 12a and 12b is served by a mobile switching center (MSC) 40 and 50 respectively. As is well known in the art, each BS 20 includes a transmitter, receiver, signal strength receiver, and a base station controller (not shown). MSC 40 and MSC 50 are connected to each other and to base stations 20 in their respective service areas by microwave links, fiber optics, copper cables or other means know or used in the art.

A plurality of mobile stations (MSs) (not shown) may be found within each BS 20. Each MS may move or roam from one BS to another, or from one telecommunication system served by an MSC to another such system served by another MSC. As an MS roams out of the coverage area of a BS, measurements of signal strength of neighboring BSs are taken to assess whether the MS should reselect a particular neighboring BS for service or be handed off to one of the neighboring BS. One method of identifying when a handoff should be initiated utilizes mobile assisted hard handoff (MAHHO), a capability introduced in the IS-95-B communications protocol. MAHHO allows a serving BS to request an MS to perform pilot strength measurements on not just the pilot it is currently on, but also on multiple other pilots of a candidate frequency. The serving BS can make this request as a one time request or a request that results in periodic measurements made over time. In either case, the MS responds with measurements for the various applicable pilots of the candidate frequency. These are sent to the serving BS, which then passes them on to the target BS, which can then attempt to allocate a channel during hard handoff, based on the MS's measurements.

In networks that utilize MAHHO, the MS receives on a dedicated channel, a neighbor list identifying neighboring BSs from which the MS is to measure the signal strength. The MS measures the signal quality of the connection by measuring the bit error rate and the received signal strength on its assigned traffic channel. The MS also measures the signal strength of pilots in neighboring BSs as indicated in a measurement order from the serving base station. The measurement order includes the pilots on which measurements need to be made in neighboring BSs. The pilots are then ranked according to the signal strength received at the MS. These signal strength measurements are utilized to assist the target MSC in making a handoff determination and to identify the best candidate BS for handoff. The serving BS receives signal quality messages of its neighboring BSs from the MS and compares the pilots with each other. The BS considers received signal strength and propagation path loss to determine the most appropriate pilot and whether a request for handoff should be sent to the MSC.

Using the TIA/EIA-41-D inter-system protocol, messages carry information between the telecommunications systems for handoff of the call. These messages may include a FacilitiesDirective2 (FacDir2) message, a HandoffBack2 (HandBack2) message, and a HandoffToThird2 (HandThird2) message.

According to an embodiment of the invention, during a handoff between telecommunications systems, the measurement information for multiple pilots of a candidate frequency can be carried from the serving BS to the serving MSC and on to the target MSC. This allows the target MSC to use all the available signal strength information in determining the most appropriate candidate BS for handoff. By modifying the TIA/EIA-41-D standard inter-system communications protocol, the invention defines a new constructor parameter. The constructor parameter includes at least one mandatory parameter and optionally one or more additional parameters. The mandatory parameter and the one or more additional parameters each contain measurement information for a pilot of a candidate frequency. The constructor parameter may be incorporated into the TIA/EIA-41-D inter-system protocol to allow the signaling messages to carry measurement information for multiple pilots of a candidate frequency.

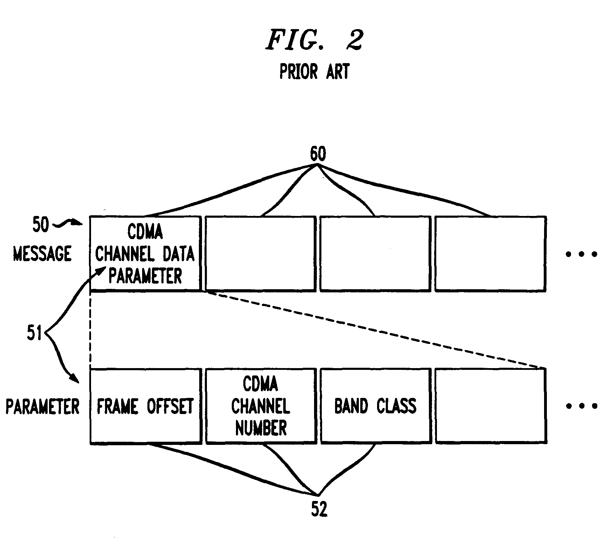

FIG. 2, illustrates a signaling message according to the current TIA/EIA-41-D standard inter-system communications protocol. Each message 50 comprises a number of message parameters 60 such as the CDMAChannelData parameter 51. Each message parameter further comprises a number elements or fields 52 (i.e. for the CDMAChannelData parameter 51 the fields 52 include the CDMA Channel Number field, the Frame Offset field and a Band Class field). According to the TIA/EIA-41-D standard each message parameter is classified as either mandatory or optional.

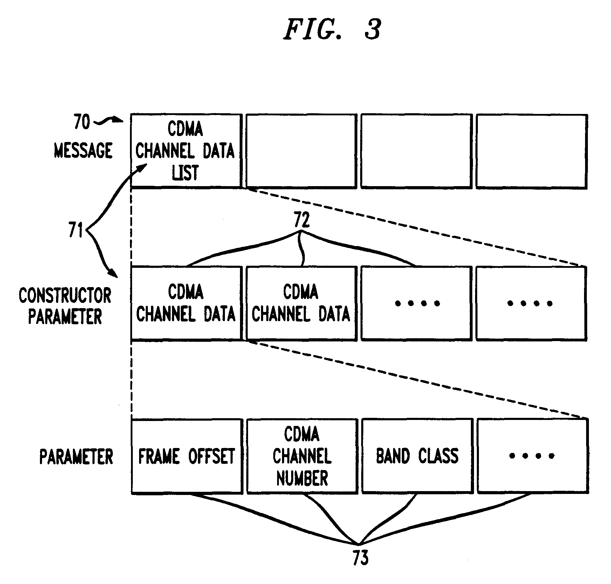

In one embodiment of the invention, shown in FIG. 3, the CDMAChannelData parameter of a signaling message 70 is replaced with a constructor parameter 71(Labled in FIG. 3 as the CDMA ChannelDataList parameter). The constructor parameter 71 comprises one or more parameters 72, such as the CDMAChannelData parameter, each conveying measurement information for a pilot of a candidate frequency. Preferably, one of the parameters 72 is a mandatory parameter, and the remainder are optional parameters. Each of the parameters 72 further comprises a number elements or fields 73. By adding the constructor parameter 71, a solution is provided which allows for the conveyance of measurement information for multiple pilots of a candidate frequency. Replacing the CDMAChannelData parameter with a constructor parameter capable of carrying measurement information for multiple pilots, provides the ability to convey more comprehensive measurement information from one telecommunications system to another. This allows a target system to better determine the most appropriate BS to receive a handoff based on the available measurement information..

The examples below describe a Handoff Forward - a handoff of an MS from an anchor and serving MSC to a target MSC: a Handoff Back - a handoff of an MS from a serving MSC back to and anchor MSC; and a Handoff To Third - a handoff of an MS from a serving MSC to a target MSC. The examples refer to telecommunication systems using signaling messages according to the TIA/EIA-41-D inter-system protocol. The descriptions are intended for illustration only and are not intended to limit the scope or applicability of the invention.

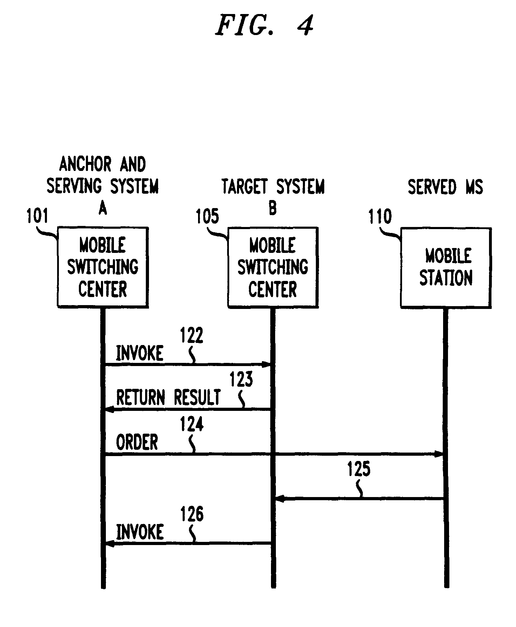

FIG. 4 is a signaling diagram according to the invention which illustrates the flow of messages during handoff of an MS from an anchor and serving MSC 101 to a target MSC 105. This process is referred to herein as a Handoff Forward.

The Handoff Forward process begins when the serving MSC 101 elects, based on an internal algorithm, to determine if a handoff to an adjacent candidate MSC is appropriate. The internal algorithm of an MSC is specific to the radio frequency (RF) propagation characteristics of the particular geographic area in which the MSC is located. Upon determining a handoff is necessary, the serving MSC 101 proceeds to send a FacilitiesDirective2 (FACDIR2) invoke message 122 to the target MSC 105, directing the target MSC 105 to initiate a handoff forward. The FACDIR2 invoke message contains the constructor parameter of the present invention capable of carrying measurement information from an MS for multiple pilots of a candidate frequency. The target MSC 105 initiates a handoff and sends a FACDIR2 return result message 123 to the serving MSC 101 in which it indicates the channel chosen by the target MSC. The target MSC chooses the channel based on the measurement information contained in the constructor parameter previously received by the target MSC in the FACDIR2 invoke message. On receipt of the FACDIR2 return result message 123, the serving MSC sends a handoff order 124 to the served MS indicating the chosen channel that the MS is to re-tune to as part of the handoff process. Once the MS has re-tuned to and is received on the chosen channel (indicated in FIG 4 as 125), the target MSC completes the path between the channel and the inter-MSC trunk and sends a MSOnChannel (MSONCH) invoke message 126 to the serving MSC 101, informing it that the target MSC has successfully completed the handoff. The serving MSC 101, on receipt of the MSONCH invoke message 126, completes the handoff process.

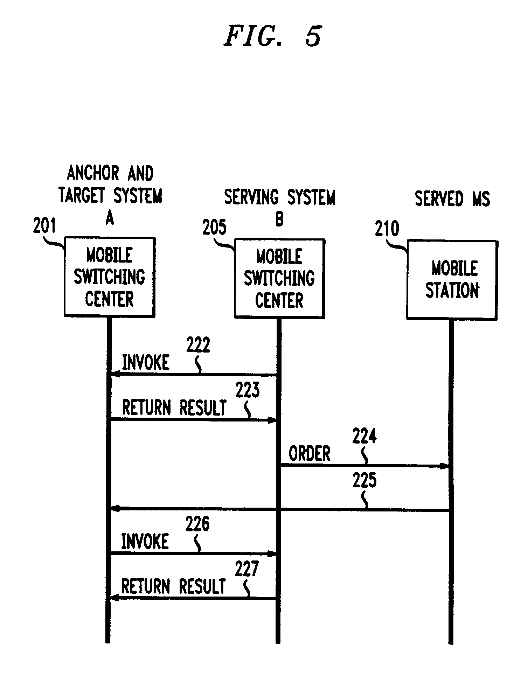

FIG. 5 is a signaling diagram according to the invention which illustrates the flow of messages during handoff of an MS from a serving MSC 205 back to an anchor and target MSC 201. This process is referred to herein as a Handoff Back.

The Handoff-Back process begins when the serving MSC 205 elects, based on an internal algorithm similar to that of the Handoff Forward process discussed above, to determine if a handoff back to an MSC is appropriate. The serving MSC 205 proceeds to send a HANDBACK2 invoke message 222 to the anchor and target MSC 201, directing the target MSC 201 to initiate a Handoff Back. The HANDBACK2 invoke message contains the constructor parameter of the present invention capable of carrying measurement information from an MS for multiple pilots of a candidate frequency. If a channel on the designated BS is available, the anchor and target MSC 201 initiates a handoff back and sends a HANDBACK2 return result message 223 to the serving MSC 205 in which it indicates the channel chosen by the anchor and target MSC 201. The target MSC chooses the channel based on the measurement information contained in the constructor parameter previously received by the target MSC in the HANDBACK2 invoke message. The serving MSC 205, on receipt of the HANDBACK2 return result message 223, sends a handoff order 224 to the served MS 210. Once the MS has re-tuned to and is received on the designated channel (indicated in FIG 5 as 225), the anchor and target MSC 201 sends a FACREL invoke message 226 to the serving MSC 205, indicating a successful handoff. The serving MSC 205 sends a FACREL return message 227 to the target MSC 201. The Handoff-back process is now complete.

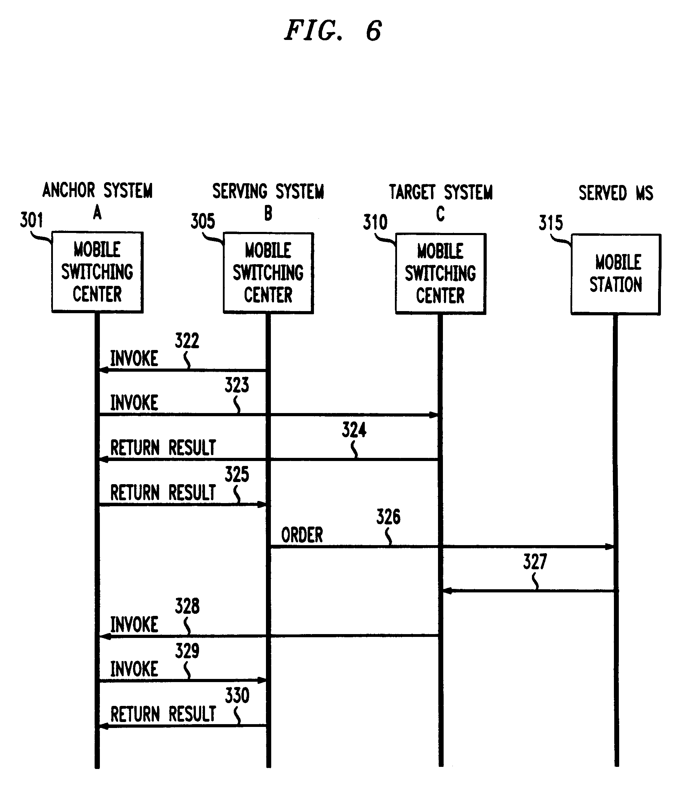

FIG. 6 is a signaling diagram according to the invention which illustrates the flow of messages during handoff of an MS from a serving MSC 305 to a target MSC 310. This process is referred to herein as a Handoff To Third.

The Handoff To Third process begins when the serving MSC 305 elects, based on an internal algorithm similar to that of the Handoff Forward process discussed above, to determine if a handoff to an adjacent candidate MSC is appropriate. The serving MSC 305 sends a HANDTOTHIRD2 invoke message 322 to the MSC that had previously handed off the call to the serving MSC 305, namely the anchor MSC 301, requesting that the anchor MSC 301 perform a handoff. The HANDTOTHIRD2 invoke message contains the constructor parameter of the present invention capable of carrying measurement information from an MS for multiple pilots of a candidate frequency. If the target MSC 310 is known to the anchor MSC 301 and an inter-MSC trunk is available, the anchor MSC 301 attempts to perform the handoff. The anchor MSC 301 sends a FACDIR2 invoke message 323 to the target MSC 310. The FACDIR2 invoke message also contains the constructor parameter of the present invention capable of carrying measurement information for multiple pilots of a candidate frequency. If a channel on the designated target cell is available, the target MSC 310 initiates a Handoff-Forward and sends a FACDIR2 return result message 324 to the requesting MSC 301. The anchor MSC 301 returns the parameters of the selected channel to the serving MSC 305 in a HANDTHIRD2 return result message 325. The serving MSC 305, on receipt of the HANDTHIRD2 return result message 325, sends a handoff order 326 to the served MS 315. Once served MS 315 is received on the designated channel (indicated in FIG 6 as 327), the target MSC 310 completes the path between the channel and the inter-MSC trunk, and sends a MSONCH invoke message 328 to the anchor MSC 301 informing it that the target MSC 310 has successfully completed the Handoff-Forward. The anchor MSC 301 connects the call path with the inter-MSC trunk to the target MSC 310, and requests release of the inter-MSC trunk to the previous serving MSC 305, by sending a FACREL invoke message 329, indicating a successful handoff. The previous serving MSC 305 marks the inter-MSC trunk as idle and sends a FACREL return result message 330 to the anchor MSC 301. Handoff is now complete.

Thus, the telecommunications network according to one embodiment of the invention comprises a plurality of telecommunication systems having a plurality of mobile switching centers(MSCs), a plurality of base stations (BSs), and a plurality of mobile stations (MSs). Each MSC is connected to a plurality of BSs. Each MS is capable of communicating with the MSCs through the base stations.

The plurality of MSCs communicate using an inter-system communications protocol providing interoperability between the MSCs. The inter-system communications protocol includes one or more signaling messages containing one or more modified message parameters. The signaling messages are transmitted between MSCs during inter-system handoffs. The signaling messages may include the TIA/EIA-41-D FacilitiesDirective2, HandoffBack2, and HandoffToThird2 messages. The one or more modified message parameters include a constructor parameter containing measurement information for multiple pilots of a candidate frequency. The constructor parameter preferably includes at least one mandatory parameter and optionally includes one or more additional parameters which contain measurement information for a pilot of a candidate frequency.

In another aspect, the invention is a method for conveying measurement information between telecommunications systems. The method comprises formatting one or more signaling messages of an inter-system communications protocol to include a constructor parameter capable of conveying measurement information for multiple pilots of a candidate frequency, and transmitting the signaling messages between telecommunications systems. The constructor parameter preferably includes at least one mandatory parameter and optionally one or more additional parameters. The mandatory parameter and the one or more additional parameters each contain measurement information for a pilot of a candidate frequency.

The method may be applied to the TIA/EIA-41 signaling standard to provide the ability to convey measurement information for multiple pilots of a candidate frequency between telecommunications systems.

Although the invention has been described in preferred embodiments with reference to the accompanying drawings, it can be readily understood that the invention is not restricted to such preferred embodiments and that various changes and modifications can be made by those skilled in the art without departing from the spirit and scope of the invention.

## Claims

1. A telecommunications network comprising:
a plurality of telecommunications systems having a plurality of mobile switching centers(MSCs), a plurality of base stations (BSs), and a plurality of mobile stations (MSs);
wherein each of said plurality of MSCs is connected to a plurality of said BSs and each of said MSs is capable of communicating with said MSCs through said BSs; and
wherein said plurality of MSCs communicate using an inter-system communications protocol providing interoperability between said plurality of MSCs; and
wherein said inter-system communications protocol includes one or more signaling messages containing one or more modified message parameters, said one or more modified message parameters including a constructor parameter capable of conveying measurement information for multiple pilots of a candidate frequency.

2. The telecommunications network of claim 1, wherein said inter-system communications protocol incorporates the TIA/EIA-41 signaling standard.

3. The telecommunications network of claim 1, wherein said constructor parameter includes at least one mandatory parameter and optionally one or more additional parameters, said mandatory parameter and said one or more additional parameters each containing measurement information for a pilot of a candidate frequency.

4. The telecommunications system of claim 1, wherein said plurality of signaling messages are sent from a serving MSC to a target MSC during inter-system hard handoffs.

5. The telecommunications system of claim 1, wherein said plurality of signaling messages includes a FacilitiesDirective2 Invoke message, a HandoffBack2 Invoke message, and a HandoffToThird2 Invoke message.

6. A method of conveying measurement information between telecommunications systems comprising:
formatting one or more signaling messages of an inter-system communications protocol to include a constructor parameter capable of conveying measurement information for multiple pilots of a candidate frequency; and
transmitting said signaling messages between said telecommunications systems.

7. The method of claim 6, wherein said formatting step is applied to the TIA/EIA-41 signaling standard.

8. The method of claim 6, wherein said constructor parameter includes at least one mandatory parameter and optionally one or more additional parameters, said mandatory parameter and said one or more additional parameters each containing measurement information for a pilot of a candidate frequency
